# EUROPEAN PATENT SPECIFICATION

(11) **EP 3 777 115 B1**
(45) Date of publication and mention of the grant of the patent: **03.07.2024**
(21) Application number: 19846856.3
(22) Date of filing: 25.07.2019
(51) Int. Cl.: H04M 1/725, H04M 3/42, G06F 3/16, G10L 15/26, G10L 17/00

(54) **ELECTRONIC DEVICE SUPPORTING PERSONALIZED DEVICE CONNECTION AND METHOD THEREOF**
ELEKTRONISCHE VORRICHTUNG ZUR UNTERSTÜTZUNG EINER PERSONALISIERTEN VORRICHTUNGSVERBINDUNG UND VERFAHREN DAFÜR
DISPOSITIF ÉLECTRONIQUE SUPPORTANT UNE CONNEXION DU DISPOSITIF PERSONNALISÉ ET PROCÉDÉ CORRESPONDANT

(30) Priority: 08.08.2018 KR 20180092704
(43) Date of publication of application: 17.02.2021
(73) Proprietor: Samsung Electronics Co., Ltd., Suwon-si 16677 (KR)
(72) Inventor: YEON, Jihyun, Suwon-si, Gyeonggi-do 16677 (KR); WON, Sungjoon, Suwon-si, Gyeonggi-do 16677 (KR); SEO, Hocheol, Suwon-si, Gyeonggi-do 16677 (KR); CHO, San, Suwon-si, Gyeonggi-do 16677 (KR); KANG, Doosuk, Suwon-si, Gyeonggi-do 16677 (KR)
(74) Representative: HGF
(86) International application number: PCT/KR2019/009260
(87) International publication number: WO 2020/032443

(56) References cited:
- JP-A- 2003 218 996
- KR-A- 20090 032 053
- KR-A- 20140 078 328
- US-A1- 2016 155 443
- US-A1- 2017 094 511
- US-A1- 2017 094 511
- US-A1- 2018 144 748
- US-B1- 6 931 104
- US-B1- 8 600 742

## Description

### [Technical Field]

The disclosure generally relates to an electronic device supporting personalized device connection, and a method thereof.

### [Background Art]

Control of electronic devices based on speech recognition has been used widely. For example, an electronic device may operate as an artificial intelligence (AI) voice-assistant using speech recognition. The electronic device may be configured to perform actions corresponding to the user's voice commands, using various speech recognition technologies (e.g., text to speech (TTS) and natural language recognition). In certain instances, the electronic device may control another electronic device to perform the actions corresponding to the user's voice commands.

In another example, another electronic device may be an AI speaker capable of AI voice-assistant function. The electronic device may support wireless connection (e.g., Wi-Fi, Bluetooth, Bluetooth low energy (BLE), device-to-device connection, and/or cellular communication) of various standards. The electronic device may operate as a hub capable of controlling other electronic devices, using connections to the other electronic devices in addition to simple music playback and Internet search.

The above information is presented as background information only to assist with an understanding of the disclosure. No determination has been made, and no assertion is made, as to whether any of the above might be applicable as prior art with regard to the disclosure.
US2016155443A1 relates to an electronic device in a topology of interconnected electronic devices that can listen for a wake phrase and voice commands. The device can control when and how it responds so that a single device responds to voice commands.
US8600742B1 relates to a method is performed by a communication device that is configured to communicate with a server over a network. The method includes outputting, to the server, speech data for spoken words; receiving, from the server, speech recognition candidates for a spoken word in the speech data; checking the speech recognition candidates against a database on the communication device; and selecting one or more of the speech recognition candidates for use by the communication device based on the checking.

US2018144748A1 relates to method comprising: receiving audio data generated by a microphone of a current computing device; identifying, based on the audio data, one or more computing devices that each emitted a respective audio signal in response to speech reception being activated at the current computing device; and selecting either the current computing device or a particular computing device from the identified one or more computing devices to satisfy a spoken utterance determined based on the audio data.

### [Disclosure]

### [Technical Problem]

An electronic device may make a voice call based on the user's voice command, and in doing so employ another electronic device. For example, the electronic device may make an outgoing call to a counterparty selected by the user, through an external electronic device (e.g., a mobile phone) of the user. In one example, the electronic device may be connected to the external electronic device over a short range communication network such as Bluetooth.

For the purpose of making an outgoing call and/or an incoming call using the external electronic device and the electronic device, the user may connect the external electronic device using Bluetooth communication. In this case, after the user activates the Bluetooth functions of the electronic device and the external electronic device, the user may perform connection by selecting the external electronic device found through device scan. Moreover, when another external electronic device (e.g., mobile phone) is connected to the electronic device, the user may need to first disconnect the connection of the other external electronic device before connecting the electronic device to the external electronic device. However, when the electronic device is associated with a plurality of external electronic devices, it may be difficult for the electronic device to select an appropriate external electronic device to make the outgoing call. For example, when an AI speaker is used by a plurality of users (e.g., family members) in a house, privacy may be violated when the wrong external electronic device is selected to make the call. That is, when the AI speaker makes a call using a first electronic device that does not belong to the user, the privacy of the user of the first electronic device may be violated.

Aspects of the disclosure are to address at least the above-mentioned problems and/or disadvantages and to provide at least the advantages described below. Accordingly, an aspect of the disclosure is to provide an electronic device supporting personalized connection.

### Solution to Problem

Aspects and embodiments of the invention are set out in the appended claims.

### Avantageous Effects of Invention

According to certain embodiments disclosed in the disclosure, the personalized connection may be supported by selecting an external electronic device based on speaker recognition.

According to certain embodiments disclosed in the disclosure, the violation of the privacy may be prevented using the personalized connection based on speaker recognition.

In addition, a variety of effects and/or advantages directly or indirectly understood through the disclosure may be provided.

### [Description of Drawings]

The above and other aspects, features, and advantages of certain embodiments of the disclosure will be more apparent from the following description taken in conjunction with the accompanying drawings, in which:
FIG. 1 is a block diagram illustrating an electronic device in a network, according to an embodiment;
FIG. 2 is a block diagram illustrating the connection between electronic devices in a network environment, according to an embodiment within the scope of the appended claims;
FIG. 3 is a block diagram illustrating communication between electronic devices in a network, according to an embodiment within the scope of the appended claims;
FIG. 4 is a signal flowchart illustrating a registration method of an external electronic device, according to an embodiment;
FIG. 5 is a flowchart illustrating a voice command executing method, according to an embodiment;
FIG. 6 is a signal flowchart illustrating a communication connection establishing method based on action information, according to an embodiment within the scope of the appended claims;
FIG. 7 is a signal flowchart illustrating a voice call executing method based on parallel execution of speech recognition and communication connection, according to an embodiment;
FIG. 8 is a signal flowchart illustrating a voice call executing method based on local speech recognition, according to an embodiment;
FIG. 9 is a flowchart illustrating a call making method, according to an embodiment;
FIG. 10 is a flowchart illustrating a call receiving method, according to an embodiment; and
FIG. 11 is a flowchart illustrating an external electronic device connection method, according to an embodiment.

### Mode for the Invention

Below, certain embodiments of the disclosure may be described with reference to accompanying drawings. The embodiments and terms used with regard to the embodiments are not intended to limit the technology described herein to specific embodiments, and should be understood to include various modifications, equivalents, and/or alternatives of the embodiments.

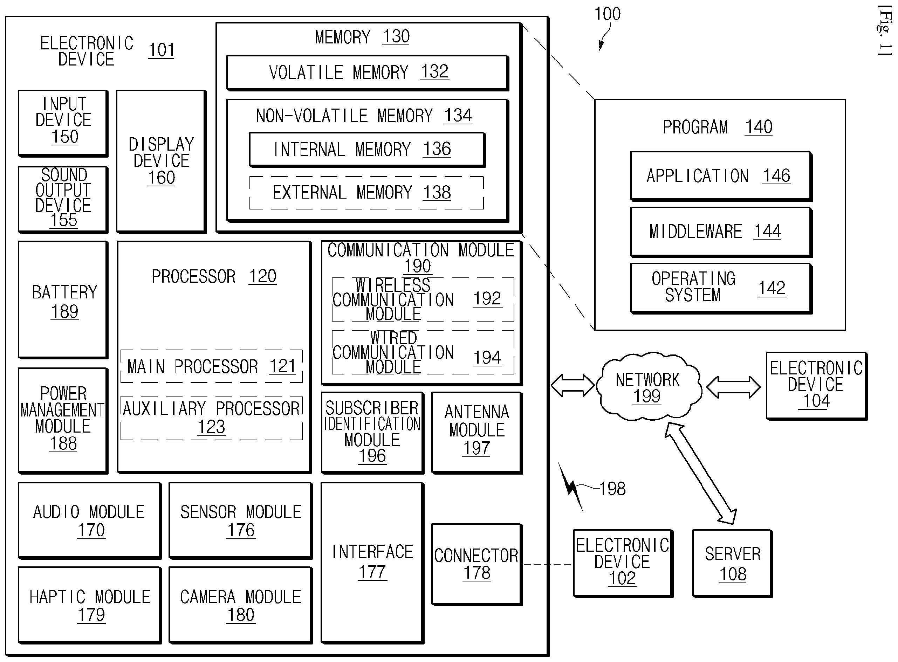

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

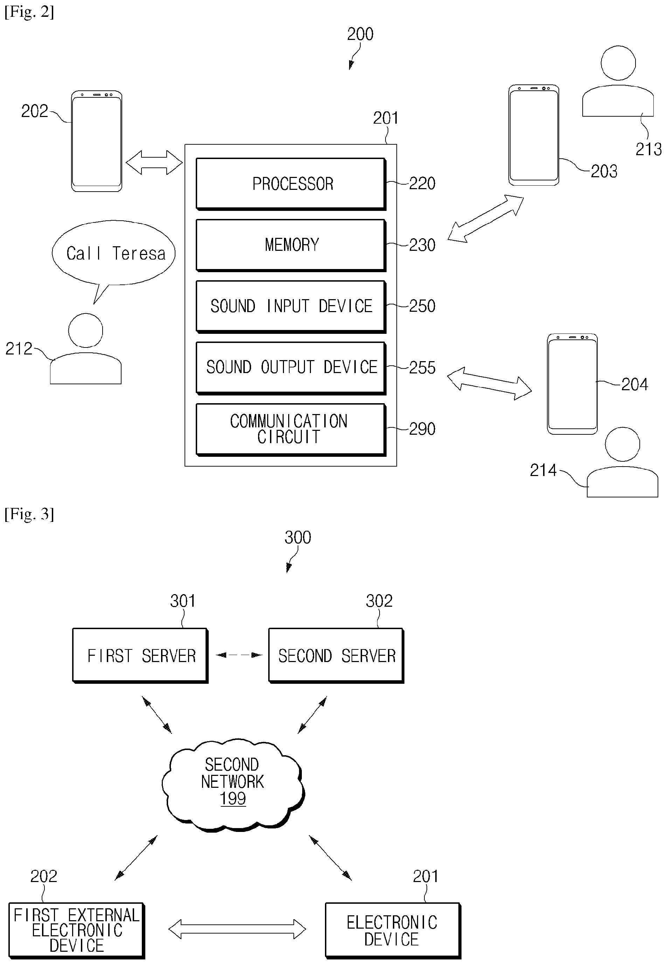

FIG. 2 is a block diagram illustrating the connection between electronic devices in a network environment 200, according to an embodiment within the scope of the appended claims.

Referring to FIG. 2, for example, an electronic device 201 supports communication with a first external electronic device 202, a second external electronic device 203, and a third external electronic device 204. For example, the first external electronic device 202 may be an electronic device associated with a first user 212; the second external electronic device 203 may be an electronic device associated with a second user 213; the third external electronic device 204 may be an electronic device associated with a third user 214. In this example, the electronic device 201 may be an artificial intelligent (AI) speaker or smart speaker. For example, each of the electronic device 201, the first external electronic device 202, the second external electronic device 203, and the third external electronic device 204 may be an electronic device including configurations similar to those of the electronic device 101 of FIG. 1. According to an embodiment, the first external electronic device 202, the second external electronic device 203, and the third external electronic device 204 may be personal electronic devices (e.g., mobile phones) positioned within a specified distance from the electronic device 201. According to an embodiment, the electronic device 201 may be the sound system (e.g., car-kit) of a vehicle, and the first external electronic device 202, the second external electronic device 203, and the third external electronic device 204 may be mobile phones positioned in the vehicle. According to an embodiment, the electronic device 201 may be a home appliance (e.g., a refrigerator, a TV, a PC, or a printer) having an AI voice-assistant function, and the first external electronic device 202, the second external electronic device 203, and the third external electronic device 204 may be mobile phones inside the house.

According to an embodiment within the scope of the appended claims, the electronic device 201 includes a processor 220 (e.g., the processor 120 of FIG. 1), a memory 230 (e.g., the memory 130 of FIG. 1), a sound input device 250 (e.g., the input device 150 of FIG. 1), a sound output device 255 (e.g., the sound output device 155 of FIG. 1), and/or a communication circuit 290 (e.g., the communication module 190 of FIG. 1). The configuration of the electronic device 201 illustrated in FIG. 2 is exemplary, and the electronic device 201 may not include at least some of the components illustrated in FIG. 2 or may further include additional components not illustrated in FIG. 2.

According to an embodiment within the scope of the appended claims, the processor 220 is operatively connected to other components of the electronic device 201 (e.g., the memory 230, the sound input device 250, the sound output device 255, and/or the communication circuit 290). The processor 220 is configured to perform operations of the electronic device 201.

For example, the processor 220 performs actions described later based on the instructions stored in the memory 230. The processor 220 may include a microprocessor or any suitable type of processing circuitry, such as one or more general-purpose processors (e.g., ARM-based processors), a Digital Signal Processor (DSP), a Programmable Logic Device (PLD), an Application-Specific Integrated Circuit (ASIC), a Field-Programmable Gate Array (FPGA), a Graphical Processing Unit (GPU), a video card controller, etc. In addition, it would be recognized that when a general purpose computer accesses code for implementing the processing shown herein, the execution of the code transforms the general purpose computer into a special purpose computer for executing the processing shown herein. Certain of the functions and steps provided in the Figures may be implemented in hardware, software or a combination of both and may be performed in whole or in part within the programmed instructions of a computer. No claim element herein is to be construed under the provisions of 35 U.S.C. §112(f), unless the element is expressly recited using the phrase "means for." In addition, an artisan understands and appreciates that a "processor" or "microprocessor" may be hardware in the claimed disclosure. Under the broadest reasonable interpretation, the appended claims are statutory subject matter in compliance with 35 U.S.C. §101.

According to an embodiment, the memory 230 may store instructions and data for controlling the actions of the processor 220. For example, the memory 230 may store information mapping various external electronic devices and users.

According to an embodiment within the scope of the appended claims, the sound input device 250 detects an analog sound signal and converts the detected signal to a digital signal. For example, the sound input device 250 may physically detect sound waves, and may convert the sound waves to electrical signals. For example, the sound input device 250 may include at least one microphone.

According to an embodiment, the sound output device 255 may output a sound signal. For example, the sound output device 255 may include at least one speaker, such as a directional, non-directional, or omnidirectional speaker.

According to an embodiment within the scope of the appended claims, the communication circuit 290 communicates with external electronic devices over various communication networks. For example, the communication circuit 290 may perform communication over a short range wireless network (e.g., the first network 198 of FIG. 1) (e.g., Bluetooth, BLE, neighbor awareness network (NAN), ZigBee, NFC, Wi-Fi, and/or WLAN). The communication circuit 290 may also perform communication over a long range wireless network (e.g., the second network 199 of FIG. 1) (e.g., a cellular network). In another example, the communication circuit 290 may communicate with another external electronic device based on a wired connection.

According to an embodiment within the scope of the appended claims, the electronic device 201 performs an action based on a voice command. For example, the electronic device 201 performs the specified action, using the voice command received using the sound input device 250.

According to an embodiment within the scope of the appended claims, the electronic device 201 detects an utterance and recives a voice command corresponding to the utterance. For example, the electronic device 201 detects the utterance by using the sound input device 250 and receives the voice command. In another example, the electronic device 201 may detect the utterance by using another electronic device (not illustrated) connected to the electronic device 201 and may receive the voice command. According to an embodiment within the scope of the appended claims, the electronic device 201 recognizes at least one text (e.g., keyword) from the voice command and performs an action associated with the recognized text (e.g., Internet search of the keyword). For example, the electronic device 201 may recognize at least one text (e.g., keyword) from the voice command by using the speech recognition function of the electronic device 201. In another example within the scope of the appended claims, the electronic device 201 transmits the received voice command to an external server and receives a path rule associated with at least one text recognized by the server.

For example, the path rule (e.g., sequence information of states of the electronic device 201 for performing the task requested by a user) includes information (e.g., action information) about an action (or operation) for performing a function of an application and/or information about a parameter (e.g., at least part of a keyword) for performing the action. For example, the path rule may include information about a sequence of actions of the application. The electronic device 201 may receive a path rule from an external server, may select an application based on the path rule, and may perform an action included in the path rule in the selected application. According to an embodiment, the electronic device 201 may perform speech recognition only when a specified voice command is received. For example, the electronic device 201 may perform speech recognition upon receiving a wake-up command. According to an embodiment, the electronic device 201 may recognize the voice corresponding to the wake-up command, using the speech recognition function of the electronic device 201 and may perform speech recognition on the voice command, using an external electronic device (e.g., a server). According to an embodiment, the electronic device 201 performs the specified action, using a parameter (e.g., a keyword) of the path rule associated with voice command and/or action information.

According to an embodiment within the scope of the appended claims, the electronic device 201 performs the specified action, using one or more of the connected external electronic devices. For example, in the embodiment of FIG. 2 covered by the scope of the appended claims, the specified action is making a call. According to an embodiment within the scope of the appended claims. the electronic device 201 receives a voice command (e.g., "call Teresa") for making a call, from the first user 212. As explained above, the voice command for making a call may be received after a specified voice command such as a wake-up command. According to an embodiment within the scope of the appended claims, the electronic device 201 performs an action corresponding to the voice command for making a call, using the connected external electronic device. For example, the electronic device 201 may direct the external electronic device 202 to make a call to a contact corresponding to "Teresa" that is stored in the external electronic device 202.

According to an embodiment, the electronic device 201 may support multi-pairing. For example, the electronic device 201 may be paired with the first external electronic device 202, the second external electronic device 203, and/or the third external electronic device 204. For example, the electronic device 201 may store the information regarding the paired external electronic devices in the memory 230. The information regarding the external electronic devices may include identifiers of the external electronic device. According to an embodiment, the electronic device 201 may transmit the information of the paired external electronic devices to an external server. According to an embodiment, the electronic device 201 may manage the information of the paired external electronic devices, based on the account of the electronic device 201 associated with the external server.

According to an embodiment within the scope of the appended claims, the electronic device 201 supports multi-point connection. For example, the electronic device 201 is connected to the first external electronic device 202, the second external electronic device 203, and/or the third external electronic device 204. According to an embodiment, and as explained in detail below, when the electronic device 201 is associated with a plurality of external electronic devices (e.g., when the electronic device 201 supports the multi-pairing and/ or multi-point connection), the electronic device 201 may select an external electronic device based on the voice command to perform an action corresponding to the voice command. For example, when the voice command (call Teresa) of the first user 212 is detected and the electronic device 201 is associated with the plurality of external electronic devices 202, 203, and 204, the electronic device 201 may support personalized device connection by selecting the first external electronic device 202 based on information (e.g., account information and/or speaker information mapped to the account information) about the first user 212.

According to an embodiment, the electronic device 201 may select an external electronic device corresponding to the voice command and may connect to the selected external electronic device. In one example, the electronic device 201 may disconnect from pre-connected external electronic devices based on the received voice command and may connect to the selected external electronic device. In another example, the electronic device 201 may maintain the connection to the pre-connected external electronic devices and may connect to the selected external electronic device based on the received voice command. The electronic device 201 may perform the specified action after connecting to the selected external electronic device. The electronic device 201 may connect to the selected external electronic device without requiring separate user input. According to different embodiments, the electronic device 201 may be connected directed to the external electronic device or be connected to the external electronic device via the external server.

According to an embodiment, the electronic device 201 may select an external electronic device based at least on the speaker recognition. For example, the electronic device 201 may recognize a speaker (e.g., the first user 212) corresponding to the voice command and may perform the specified action (e.g., making a call to "Teresa"), using the external electronic device (e.g., the first external electronic device 202) associated with a speaker. For example, the electronic device 201 may select the appropriate external electronic device using mapping information between at least one external electronic device and at least one user, which is stored in the memory 230.

According to an embodiment within the scope of the appended claims, the electronic device 201 may select an external electronic device based at least on speaker recognition and a keyword (e.g., a parameter of a path rule). For example, the electronic device 201 identifies at least one keyword (e.g., "call" and/or "Teresa") based on the speech recognition (e.g., the speech recognition by the electronic device 201 or the external server) for the voice command "call Teresa." The keyword may include the combination of words recognized from the voice command, successive syllables recognized from at least part of the voice command, words probabilistically recognized based on the recognized syllables, and/or syllables recognized from the voice command. In this example, the electronic device 201 recognizes the speaker (e.g., the first user 212) and selects the external electronic device corresponding to the speaker, by using at least one keyword (e.g., Teresa) among the recognized keywords. According to an embodiment, when a plurality of external electronic devices associated with the recognized speaker are present, the electronic device 201 selects one external electronic device among the plurality using the keyword. For example, when one external electronic device associated with the recognized first user 212 stores contact information for "Teresa," the electronic device 201 performs the specified action (e.g., making a call to "Teresa"), using the external electronic device that has the appropriate contacts information stored.

According to an embodiment, when a plurality of external electronic devices associated with the recognized speaker are present, the electronic device 201 may select an external electronic device based on a specified condition. For example, the specified condition may include a connection frequency, the degree of proximity, a connection time point, a priority, or user designation. For example, the electronic device 201 may select an external electronic device, which is most frequently connected to the electronic device 201, from among the plurality of external electronic devices associated with the recognized speaker. In another example, the electronic device 201 may select an external electronic device, which is closest to the electronic device 201 in space, from among the plurality of external electronic devices associated with the recognized speaker. In yet another example, the electronic device 201 may select an external electronic device, which has been most recently connected to the electronic device 201, from among the plurality of external electronic devices associated with the recognized speaker. In yet another example, the electronic device 201 may select an external electronic device, which has the highest priority, from among the plurality of external electronic devices associated with the recognized speaker. In still yet another example, the electronic device 201 may select an external electronic device, which is designated by the user (e.g., the recognized speaker), from among the plurality of external electronic devices associated with the recognized speaker.

Hereinafter, various embodiments will be described with reference to FIGs. 3 to 11. In the exemplary embodiments of FIGs. 3 to 11, the first external electronic device 202 is used based on the utterance of the first user 212. However, the embodiments of the disclosure are not limited thereto. For example, the details described with regard to the first external electronic device 202 may be identically applied to the second external electronic device 203 and/or the third external electronic device 204.

FIG. 3 is a block diagram illustrating communication between electronic devices in a network 300, according to an embodiment within the scope of the appended claims.

Referring to FIG. 3, the electronic device 201 and the first external electronic device 202 communicates with a first server 301 and/or a second server 302 over the second network 199. For example, the second network 199 may be the Internet.

According to an embodiment within the scope of the appended claims, the first server 301 receives data including a voice command from an external electronic device (e.g., the electronic device 201 and/or the first external electronic device 202) and performs speech recognition on the received data. For example, the first server 301 identifies the speaker and/or keywords in the speech based on speech recognition and transmits information about the identified speaker, a parameter (e.g., a keyword), and/or action information to an external electronic device. For example, the first server 301 may be a Bixby^{™} server. According to an embodiment, the first server 301 may receive data including a voice command and data including the identifier of an external electronic device, from the external electronic device. In this example, the first server 301 may identify the external electronic device, using the identifier of the external electronic device. The first server 301 may obtain information of the external electronic device corresponding to the identifier of the external electronic device, from the second server 302.

According to an embodiment within the scope of the appended claims, the first server 301 identifies the speaker associated with a voice command, based on voice information of various users. For example, the first server 301 may form a user's voice model trained by the user's voice using a specified method. The voice model may include feature points corresponding to the voice of the speaker and may be used for speaker identification. The first server 301 may receive one or more user voices from various electronic devices (e.g., the electronic device 201) and may generate various speaker's voice models corresponding to different user voices. The various models may be trained by the received user voices using a deep neural network (DNN). For example, the electronic device 201 may present a specified sentence to the user and may receive the speech of the user speaking the specified sentence. The speech may be transmitted to the first server 301. In another example, training of the voice model may be done locally on the electronic device 201, and the first server 301 may receive the voice model trained by the electronic device 201 from the electronic device 201.

According to an embodiment, the first server 301 may store the voice model together with account information of the electronic device 201. For example, when the user voice and/or the voice model is received from the electronic device 201 while the electronic device 201 is logged in to a user account, the first server 301 may map the voice model to the account information (e.g., the user account) of the electronic device 201 and store the mapped result. For example, the first server 301 may obtain user account information of the electronic device 201 from the second server 302 and/or the electronic device 201. For another example, the first server 301 may receive information (e.g., a name or a user identifier) associated with the user account from the electronic device 201 or the second server 302 and may store information associated with the user account together with the voice model.

According to an embodiment within the scope of the appended claims, when the voice command is received from the electronic device 201, the first server 301 identifies the speaker (e.g., an account associated with the voice model), using the voice model corresponding to the voice command. For example, the first server 301 may identify the speaker based at least on a comparison between the voice model, which is associated with the account of the electronic device (e.g., the electronic device 201) transmitting a voice command, and the received voice command.

According to an embodiment within the scope of the appended claims, the first server 301 identifies at least one keyword from the voice command. For example, the first server 301 may receive the voice command corresponding to "call Teresa" from the electronic device 201 and may identify keywords of "call" and "Teresa" from the voice command. For example, the first server 301 may identify the keyword from the combination of words recognized from the voice command, successive syllables recognized from at least part of the voice command, words probabilistically recognized based on the recognized syllables, and/or syllables recognized from the voice command.

According to an embodiment within the scope of the appended claims, the first server 301 generates action information in a path rule from the voice command. For example, the first server 301 generates action information, based on the keyword identified from the voice command. For example, the first server 301 identifies the action associated with making a call, from the keyword of "call" and generates action information including an action identifier (e.g., information about the sequence of states corresponding to an action) corresponding to the identified action.

According to embodiments within the scope of the appended claims, the first server 301 transmits the path rule including at least one parameter (e.g., the identified speaker and/or the keyword) and the action information, to the electronic device 201. The first server 301 transmits identification information (e.g., a user's name, the user's identifier, and/or the user's account information) of the identified first user 212, and transmits the identified keyword (e.g., a parameter associated with the action) of "Teresa", and/or action information associated with making a call, to the electronic device 201 based on the voice command received from the electronic device 201.

According to an embodiment within the scope of the appended claims, the first server 301 transmits the path rule to the first external electronic device 202 based on the voice command and function information of an electronic device received from the electronic device 201. For example, when a voice command is received from the electronic device 201, the first server 301 may obtain the function information of the electronic device 201, from the second server 302. When it is determined that the electronic device 201 does not support the action (e.g., making a call) corresponding to the voice command based on the function information, the first server 301 may transmit the path rule to the external electronic device (e.g., the first external electronic device 202) associated with the first user 212 identified based on the voice command, via the electronic device 201. For example, the first server 301 may transmit the path rule and the instruction indicating the transmission of the path rule to the first external electronic device 202, to the electronic device 201.

According to an embodiment, the first server 301 may transmit the identified keyword (e.g., parameter) of "Teresa" and/or action information (e.g., a path rule) associated with making a call, to the first external electronic device 202 associated with the account of the identified first user 212 based on the voice command received from the electronic device 201. For example, the first server 301 may transmit the identified keyword and/or the action information to the first external electronic device 202 via the second server 302.

According to an embodiment, the second server 302 may manage the user accounts and information of electronic devices associated with the user accounts. For example, the second server 302 may manage the user account of the first user 212 and information of the electronic device (e.g., the first external electronic device 202 and/or the electronic device 201), which is associated with (e.g., registered with) the user account. For example, the second server 302 may store information about functions (e.g., ability to make a call, voice output, connectivity, and/or voice input) of an electronic device associated with the user account.

According to an embodiment, the second server 302 may receive identification information (e.g., account information, telephone number, e-mail address, and/or unique identifier (UID)) and address information (e.g., the address (e.g., Bluetooth address) of the first external electronic device 202), which are associated with the first user 212 and/or the first external electronic device 202, from the first external electronic device 202. According to an embodiment, the first external electronic device 202 may transmit identification information (e.g., the identifier of the electronic device 201 and/ or the account information of the electronic device 201) of the electronic device 201, identification information associated with the first external electronic device 202, and address information associated with the first external electronic device 202 to the second server 302. For example, the first user 212 of the first external electronic device 202 may register the electronic device 201 in the account of the first external electronic device 202, using the first external electronic device 202. The first external electronic device 202 may provide a user interface for the registration of another electronic device and may transmit the identification information of the electronic device 201 to the second server 302 based on inputs to the user interface. In another example, when the first external electronic device 202 is paired with or connected to the electronic device 201, the first external electronic device 202 may transmit the identification information of the electronic device 201 to the second server 302.

According to an embodiment, the second server 302 may transmit identification information and address information associated with the first external electronic device 202, to the electronic device 201 based on a request from the first external electronic device 202 or the first server 301. For example, the second server 302 may identify the electronic device 201 based on the identification information of the electronic device 201 received from the first external electronic device 202 and may transmit the identification information and the address information associated with the first external electronic device 202 to the identified electronic device 201.

According to an embodiment, the first external electronic device 202 and the electronic device 201 may be in a state where the first external electronic device 202 and the electronic device 201 are logged into the second server 302. For example, the first external electronic device 202 and the electronic device 201 may be logged into the second server 302 using the same account (e.g. the account of the first user 212). In another example, the first external electronic device 202 and the electronic device 201 may be logged into the second server 302 using accounts belonging to the same group account. In yet another example, the first external electronic device 202 may be logged into the second server 302 using a second account, and the electronic device 201 may be logged into the second server 302 using a first account different from the second account.

According to an embodiment, the electronic device 201 may include a first server client controlling the communication with the first server 301. For example, the first server client may include an application and/or a service stored in the memory 230. For example, the first server client may perform speech recognition. According to an embodiment, the electronic device 201 may include a contacts application for managing contacts information. The contacts application may manage the contacts information of the external electronic device that is registered with, paired with, or connected to the electronic device 201. The contacts application may search for contacts information based on the request of the first server client. According to an embodiment, the electronic device 201 may include an account administrator. For example, the account administrator may manage the account information of the electronic device 201 associated with the second server 302 and the account information of the external electronic device (e.g., the first external electronic device 202). According to an embodiment, the electronic device 201 may include a call application. For example, the call application may control the function of making a voice call using the external electronic device. According to an embodiment, the electronic device 201 may include a communication framework. For example, the communication framework may control the communication with the external electronic device based on the specified protocol. For example, the communication framework may include a Bluetooth framework.

According to an embodiment, the first external electronic device 202 may be an electronic device registered with the electronic device 201. For example, the electronic device 201 may store the identification information and the address information of the first external electronic device 202.

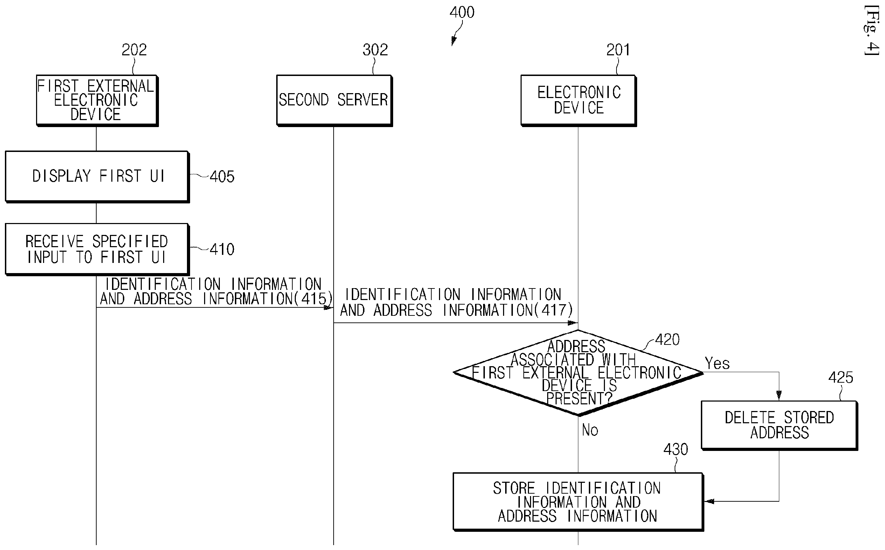

FIG. 4 is a signal flowchart illustrating a signal flow 400 of a registration method of an external electronic device, according to an embodiment.

In FIG. 4, it is assumed that the first external electronic device 202 and the electronic device 201 are logged into the second server 302. For example, the first external electronic device 202 and the electronic device 201 may be logged into the second server 302 using the same account, accounts belonging to the same group account, or different accounts. According to an embodiment, in operation 405, the first external electronic device 202 may display a first UI on the display of the first external electronic device 202. For example, the first external electronic device 202 may display the first UI on the display based on a user input (e.g. a selection to display the first UI). According to an embodiment, the first UI may be a UI corresponding to a call application. For example, the first UI may include an icon (e.g., a Bluetooth icon) for connecting to the electronic device 201. The first UI corresponding to a call application is only an example, and the disclosure is not limited thereto. For example, the first UI may be the UI of an arbitrary application (e.g., SmartThings or Bixby^{™}) supporting the connection with the electronic device 201. As such, the first UI may include a UI for connecting to the electronic device 201.

According to an embodiment, in operation 410, the first external electronic device 202 may receive the specified input to the first UI. For example, the specified input may be an input indicating that the first external electronic device 202 should connect to the electronic device 201.

According to an embodiment, in operation 415, the first external electronic device 202 may transmit the identification information and the address information of the first external electronic device 202 to the second server 302. According to an embodiment, the first external electronic device 202 may connect to the electronic device 201 in response to a specified input and may obtain the address information of the first external electronic device 202 associated with the connection. According to an embodiment, after connecting to the electronic device 201, the first external electronic device 202 may transmit identification information associated with the first external electronic device 202, address information associated with the first external electronic device 202, and/or identification information of the electronic device 201 to the second server 302. For example, the first external electronic device 202 may transmit identification information (e.g., account information, a telephone number, e-mail address, and/or UID) associated with the first external electronic device 202, address information (e.g., the address (e.g., Bluetooth address) of the first external electronic device 202) associated with the first external electronic device 202, and/or identification information (e.g., the identifier of the electronic device 201 and/or account information of the electronic device 201) of the electronic device 201 to the second server 302.

According to an embodiment, in operation 417, the second server 302 may transmit the identification information and the address information of the first external electronic device 202 to the electronic device 201. For example, the second server 302 may transmit the identification information and the address information of the first external electronic device 202 to the electronic device 201 based at least on the identification information of the electronic device 201 received from the first external electronic device 202. In another example, the first external electronic device 202 and the electronic device 201 may belong to the same account or accounts that are associated with each other in the second server 302. In this case, the second server 302 may transmit the identification information and the address information of the first external electronic device 202 to electronic devices (e.g., the electronic device 201) corresponding to the same or associated accounts.

According to an embodiment, the first external electronic device 202 may transmit the identification information and the address information of the first external electronic device 202 to the electronic device 201. For example, the first external electronic device 202 may transmit the identification information and the address information of the first external electronic device 202 to the electronic device 201 through the connection to the electronic device 201. In this case, operation 417 may be skipped.

According to an embodiment, in operation 420, the electronic device 201 may determine whether the address associated with the first external electronic device is present in the memory 230 of the electronic device 201. For example, the memory 230 of the electronic device 201 may store a database including the mapping of the identification information and the address information of the external electronic devices registered with the electronic device 201.

According to an embodiment, when the address information about the first external electronic device 202 is present, the electronic device 201 may delete the stored address in operation 425, and the electronic device 201 may store the identification information and the address information in the memory 230 in operation 430. Accordingly, the electronic device 201 may update the stored address information of the first external electronic device 202.

According to an embodiment, when information about the first external electronic device 202 is not present, in operation 430, the electronic device 201 may store the received identification information and the received address information of the first external electronic device 202 in the memory 230.

In the descriptions below, unless otherwise described, it may be assumed that the first external electronic device 202 is registered with the electronic device 201.

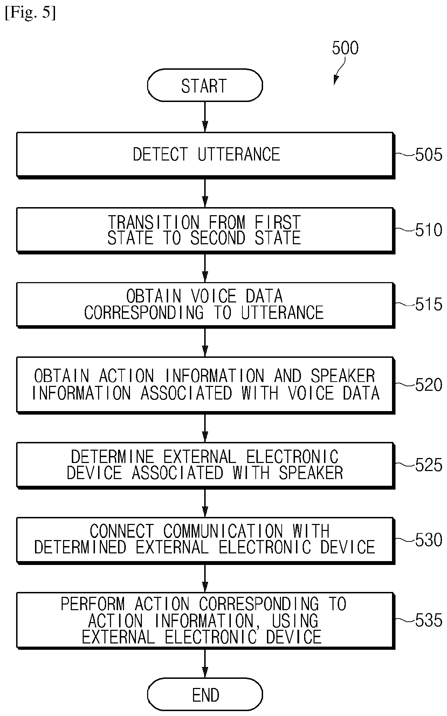

FIG. 5 is a flow chart illustrating a voice command executing method 500 according to an embodiment.

The voice command executing method through the connection between the first external electronic device 202 and the electronic device 201 will be described with reference to FIG. 5. In the embodiment of FIG. 5, the first external electronic device 202 may be in a state where it has been previously paired with the electronic device 201 but is not currently connected to the electronic device 201. For example, the first external electronic device 202 may have been connected the electronic device 201 in the past and information (e.g., identification information or address information) of the first external electronic device 202 is stored in the memory (e.g., the memory 230 of FIG. 2) of the electronic device 201.

According to an embodiment, in operation 505, the electronic device 201 may detect an utterance of a user (e.g., the first user 212 of FIG. 2). For example, the electronic device 201 may detect the utterance of the user, using the sound input device (e.g., the sound input device 250 of FIG. 2) of the electronic device 201.

According to an embodiment, in operation 510, the state of the electronic device 201 may transition from a first state to a second state. For example, the state of the electronic device 201 may transition from the first state (e.g., an idle state or a standby state) to the second state (e.g., a wake-up state or an active state) in response to the detection of the utterance. For example, the second state may be a state where power consumption is higher than the power consumption of the first state. According to an embodiment, operation 510 may be skipped. For example, the electronic device 201 may be in the second state before the detection (operation 505) of the utterance.

According to an embodiment, in operation 515, the electronic device 201 may obtain voice data corresponding to the utterance. According to an embodiment, the electronic device 201 may obtain the voice data by receiving a voice signal (e.g., the user's utterance) using the voice input device. For example, the voice data corresponding to the utterance may include a specified voice command (e.g., a wake-up command) and a voice command. In another example, the voice data corresponding to the utterance may include the voice command received after the specified voice command (e.g., the wake-up command). In yet another example, the voice data corresponding to the utterance may include only the specified voice command (e.g., the wake-up command).

According to an embodiment, in operation 520, the electronic device 201 may obtain action information and speaker information associated with the voice data.

According to an embodiment, the electronic device 201 may obtain speaker information based at least on speech recognition of the voice data. For example, the electronic device 201 may recognize the speaker (e.g., the first user 212) corresponding to the voice data, using the speech recognition function embedded in the electronic device 201. In another example, the electronic device 201 may identify the account corresponding to the received voice command, using the voice model stored in the electronic device 201 and account information mapped to the voice model stored in the electronic device 201. The electronic device 201 may identify the speaker corresponding to the voice command and may identify the account associated with the speaker. Thus, the electronic device 201 may identify the account corresponding to the voice data. The electronic device 201 may determine the electronic device associated with the identified account. In another example, the electronic device 201 may transmit the voice data to an external electronic device (e.g., the first server 301 of FIG. 3) using a communication circuit (e.g., the communication circuit 290 of FIG. 2) and may obtain the speaker information from the external electronic device. For example, the electronic device 201 may receive information of the account corresponding to the voice data from the external electronic device.

According to embodiments, the speaker information includes identification information of the speaker or an electronic device (e.g., the first external electronic device 202 of FIG. 2) associated with the speaker. For example, the speaker information may include the account information (e.g., account information stored in the second server 302 of FIG. 3, a telephone number, and/or e-mail address) of the speaker or the electronic device associated with the speaker.

According to an embodiment, the electronic device 201 may obtain action information based at least on speech recognition of the voice data. For example, the electronic device 201 may recognize the keyword corresponding to the voice data, using the speech recognition function embedded in the electronic device 201 and may obtain the action information corresponding to the keyword. For another example, the electronic device 201 may transmit the voice data to the external electronic device and may receive a path rule (e.g., a parameter and action information) generated based on the speech recognition, from the external electronic device. For example, in the embodiment of FIG. 2, "call Teresa" may include keywords of "call" and "Teresa," and the action information may indicate the action of making a call. The path rule may include the parameter corresponding to the keyword "Teresa" and the action information corresponding to making a call. For example, the path rule may be information indicating action corresponding to making a call associated with the parameter "Teresa."

According to embodiments, in operation 525, the electronic device 201 determines the external electronic device associated with the speaker. According to an embodiment, the electronic device 201 may obtain information about the external electronic device associated with (e.g., mapped to the account of the identified speaker) the identified speaker, from the memory 230. For example, the electronic device 201 may obtain the information of the external electronic device associated with the identified speaker, using mapping between account information and address information of external electronic devices stored in the memory 230. For example, the electronic device 201 may obtain the address (e.g., Bluetooth address) of the external electronic device associated with the speaker and/or the identification information of the external electronic device from the memory 230. For example, the electronic device 201 may obtain the information of the first external electronic device 202 associated with the first user 212.

According to embodiments, when a plurality of external electronic devices associated with the identified speaker are present, the electronic device 201 selects one external electronic device from the plurality. For example, the electronic device 201 may determine one external electronic device associated with the action information, the keyword included in the action information, and/or the identified speaker. For example, when a plurality of external electronic devices associated with the first user 212 are present, the electronic device 201 may determine an external electronic device storing contact information corresponding to the identified keyword "Teresa" as the external electronic device to be connected. Thus, the electronic device 201 may identify the external electronic device including contact information corresponding to the identified keyword, using the contacts information stored in the memory of the plurality of external electronic devices and/or contacts information of the plurality of external electronic devices stored in an external server (e.g., the second server 302 of FIG. 3).

According to an embodiment, the electronic device 201 may determine one external electronic device from the plurality of external electronic devices, based on the degree of proximity and/or the connection frequency of each of the plurality of external electronic devices associated with the identified speaker. For example, when a plurality of external electronic devices associated with the first user 212 are present, the electronic device 201 may select the external electronic device closest in space to the electronic device 201 or most frequently connected to the electronic device 201, at the time of receiving the utterance.

According to an embodiment, the electronic device 201 may determine one external electronic device from the plurality of external electronic devices, based on the state of the external electronic device. For example, a plurality of electronic devices associated with the first user 212 may be present, the electronic device 201 may obtain the state information of the external electronic devices using an external server (e.g., an IoT server). For example, when the first external electronic device of the external electronic devices is executing a game and the second external electronic device is in a standby state, the electronic device 201 may perform the specified action (e.g., making a call) using the second external electronic device.

According to an embodiment, the electronic device 201 may select the external electronic device most recently connected to the electronic device 201 from among the plurality of external electronic devices associated with the identified speaker.

According to an embodiment, in operation 530, the electronic device 201 may connect to the determined external electronic device. For example, the electronic device 201 may connect to the determined external electronic device, using the address of the determined external electronic device and/or the identification information of the external electronic device. For example, the electronic device 201 may connect to the determined external electronic device, by making a request for the connection using the address information of the external electronic device, which is obtained from the Bluetooth framework of the electronic device 201. In the previous examples, the electronic device 201 may connect to the first external electronic device 202.

In the above-described examples, one external electronic device of a plurality of external electronic devices associated with a single speaker is selected. However, a plurality of speakers (e.g., users) may be registered with one external electronic device. For example, a child may be registered with each of the electronic devices of the parents. In this case, the father and the child are registered with the electronic device of the father, and the mother and the child are registered with the electronic device of the mother. When a voice command is received from the child, the electronic device 201 may recognize a plurality of speakers to select an external electronic device. For example, when it is determined, based on speech recognition, that the child and the mother are gathered together, the electronic device 201 may perform the specified action (e.g., making a call), using the electronic device of the mother. In another example, when it is determined, based on speech recognition, that the child and the father are gathered together, the electronic device 201 may perform the specified action, using the electronic device of the father.

According to embodiments, in operation 535, the electronic device 201 performs the action corresponding to the action information, using the connected external electronic device. For example, the electronic device 201 may transmit a signal, which allows the external electronic device to perform the action corresponding to the action information, to the connected external electronic device by using the communication circuit 290. For example, the electronic device 201 may direct the first external electronic device 202 to make an outgoing call to the number corresponding to the identified keyword "Teresa." According to an embodiment, the electronic device 201 may perform actions associated with the outgoing call made by the first external electronic device 202. For example, the electronic device 201 may output the voice received from the first external electronic device 202 and may transmit the voice received by the electronic device 201, to the first external electronic device 202.

The operations of FIG. 5 are exemplary for description, and embodiments of the disclosure are not limited thereto. For example, in the performing operation 535, the electronic device 201 may transmit the signal for instructing to perform the action corresponding to action information, to the external electronic device through an external server (e.g., the second server 302 of FIG. 3). In this case, operation 530 may be skipped.

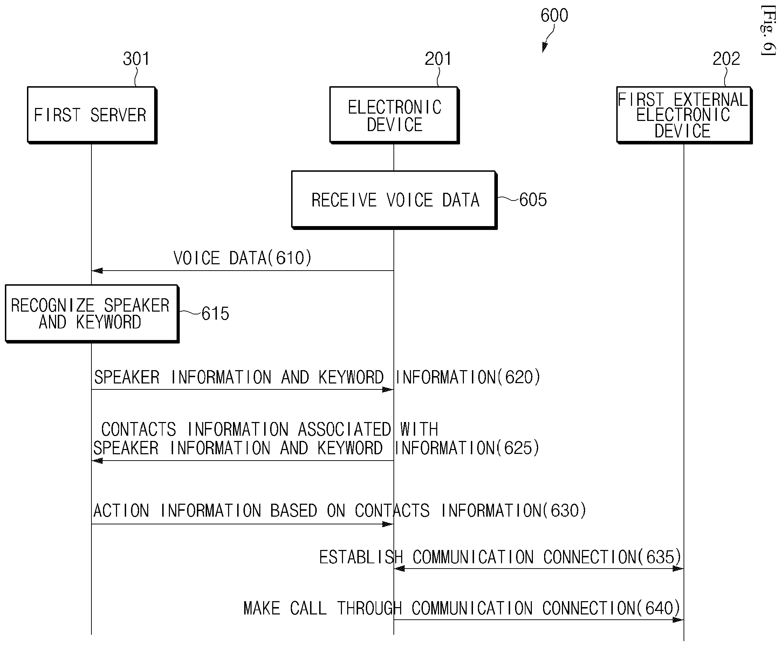

Hereinafter, various signal flows corresponding to the voice command executing method of FIG. 5 will be described with reference to FIGs. 6 to 8. In FIGs. 6 to 8, for convenience of description, it may be assumed that the voice command is associated with making a call.

FIG. 6 is a signal flowchart illustrating a communication connection establishing method 600 based on action information, according to an embodiment within the scope of the appended claims.

According to an embodiment, the electronic device 201 may include a first server client for controlling the communication with the first server 301, a contacts application managing contacts information, an account administrator managing account information associated with the second server 302 and account information of an external electronic device (e.g., the first external electronic device 202), a call application controlling the function to perform a voice call, and a communication framework (e.g., Bluetooth framework) controlling the communication with the external electronic device based on the specified protocol.

According to an embodiment within the scope of the appended claims, in operation 605, the electronic device 201 receives voice data. The description of operation 605 may be the same or similar to the description associated with operation 515 of FIG. 5.

According to an embodiment within the scope of the appended claims, in operation 610, the electronic device 201 transmits voice data to the first server 301. For example, the electronic device 201 may transmit the voice data to the first server 301 via a second network (e.g., the second network 199 of FIG. 1), using a communication circuit (e.g., the communication circuit 290 of FIG. 2). According to an embodiment, the electronic device 201 may include a first server client controlling the communication with the first server 301. For example, the electronic device 201 may transmit the voice data to the first server 301 under the control of the first server client.

According to an embodiment within the scope of the appended claims, in operation 615, the first server 301 recognizes a speaker and a keyword based on speech recognition of the received voice data. According to an embodiment, the first server 301 may recognize the speaker by performing speech recognition on the received voice data. For example, the first server 301 may recognize the speaker by using the stored voice model of the speaker. The first server 301 may store the information (e.g., the account information of an external electronic device) of the external electronic device registered with the electronic device 201, received from the electronic device 201 or the second server 302 of FIG. 3. According to an embodiment, the first server 301 may perform speech recognition on the voice data, using the voice model (e.g., the voice model mapped to the account of the external electronic device) associated with the external electronic device registered with the electronic device 201. According to an embodiment, the first server 301 may recognize the keyword by performing speech recognition on the received voice data. For example, the first server 301 may recognize the keyword (e.g., "call" and "Teresa") based on the received voice data.

According to an embodiment within the scope of the appended claims, in operation 620, the first server 301 transmits speaker information and keyword information (e.g., parameter of path rule) to the electronic device 201. For example, the speaker information includes account information, e-mail address, and/or a telephone number associated with the identified speaker. For example, the keyword information may include the recognized keyword (e.g., Teresa). According to an embodiment, in operation 620, the transmission of speaker information and keyword information by the first server 301 is referred to as the transmission of the first path rule including the speaker information and the keyword information as parameters and including action information indicating searching for the speaker information and the keyword information. For example, the speaker information and the keyword information may be received by the first server client of the electronic device 201.

According to an embodiment, in operation 625, the electronic device 201 may transmit contacts information associated with speaker information and keyword information, to the first server 301. For example, the electronic device 201 may search for mapping information of the user and an external electronic device and contacts information associated with the external electronic device, which are stored in the memory (e.g., the memory 230 of FIG. 2) of the electronic device 201, using the received speaker information and keyword information. According to an embodiment within the scope of the appended claims, the electronic device 201 determines at least one external electronic device associated with the speaker, using the speaker information. According to embodiments within the scope of the appended claims, the electronic device 201 searches for contact information corresponding to the keyword (e.g., Teresa) in the contacts of the determined at least one external electronic device (e.g. the external electronic device corresponding to the speaker) and determines an external electronic device (e.g., the first external electronic device 202), which will perform communication connection, from among at least one external electronic device, using the contact information corresponding to a keyword.

According to an embodiment, the electronic device 201 may receive the speaker information and the keyword information using the first server agent, and may perform searching of the contact information for the received speaker and keyword information, using a contacts application. The first server agent may receive the contacts information (e.g., a telephone number) from the contacts application and may transmit the received contacts information to the first server 301 through a communication circuit.

According to an embodiment, the electronic device 201 may determine one external electronic device in the plurality of external electronic devices, based on the degree of proximity and/or the connection frequency of each of the plurality of external electronic devices associated with the identified speaker. For example, when a plurality of external electronic devices associated with the first user 212 are present, the electronic device 201 may select an external electronic device closest to the electronic device 201 or most frequently connected to the electronic device 201, at the time of receiving the utterance.

According to an embodiment, the electronic device 201 may select an external electronic device most recently connected to the electronic device 201 from among the plurality of external electronic devices associated with the identified speaker.

According to an embodiment, in operation 630, the first server 301 may transmit action information based on the contacts information, to the electronic device 201. For example, the action information may include contacts information and account information corresponding to the first external electronic device 202. According to an embodiment, in operation 630, the action information based on the contacts information of the first server 301 may be referred to as the transmission of a second path rule including action information indicating the communication connection between the electronic device 201 and the first external electronic device 202. For example, the action information may be received by the first server client of the electronic device 201.

For example, operation 610, operation 615, operation 620, operation 625, and operation 630 described above may correspond to operation 520 and operation 525 of FIG. 5.

According to an embodiment within the scope of the appended claims, in operation 635, the electronic device 201 establishes the communication connection to the first external electronic device 202 based at least on the action information received from the first server 301. For example, the first server client of the electronic device 201 may transmit contacts information and account information included in the action information, to a call application. The call application may obtain address information corresponding to the account information, from the account administrator. The call application may request a Bluetooth framework to establish the communication connection to the first external electronic device 202 by using the obtained address information. For example, operation 635 may correspond to operation 530 of FIG. 5.

According to an embodiment within the scope of the appended claims, in operation 640, the electronic device 201 makes a call through the communication connection, using the first external electronic device 202. For example, when information indicating the establishment of the communication connection is received from the Bluetooth framework, the call application may make an outgoing call through the connection to the first external electronic device 202. For example, the description of operation 640 may correspond to operation 535 of FIG. 5.

According to an embodiment within the scope of the appended claims, when the speaker information and the keyword information (e.g., "call" and "Teresa") are received from the first server 301 (e.g., operation 620), the electronic device 201 establishes (e.g., operation 635) the communication connection to the first external electronic device 202, using the speaker information and the keyword information and makes a call (e.g., operation 640) through the communication connection. In this case, operation 625 and operation 630 may be omitted. For example, the electronic device 201 searches for mapping information between the user and an external electronic device and contacts information associated with the external electronic device, which are stored in the memory (e.g., the memory 290 of FIG. 2) of the electronic device 201, using the contacts information associated with the speaker information and the keyword information. According to an embodiment within the scope of the appended claims, the electronic device 201 determines at least one external electronic device associated with the speaker, using the speaker information, searches for contact information corresponding to the keyword (e.g., "Teresa") stored in the contacts of the determined at least one external electronic device and determines an external electronic device (e.g., the first external electronic device 202), which will perform communication connection, from among at least one external electronic device using contact information corresponding to the keyword. According to an embodiment within the scope of the appended claims, the electronic device 201 performs an action (e.g., operation 635 and operation 640) corresponding to the determined external electronic device and the keyword (e.g., "Call").

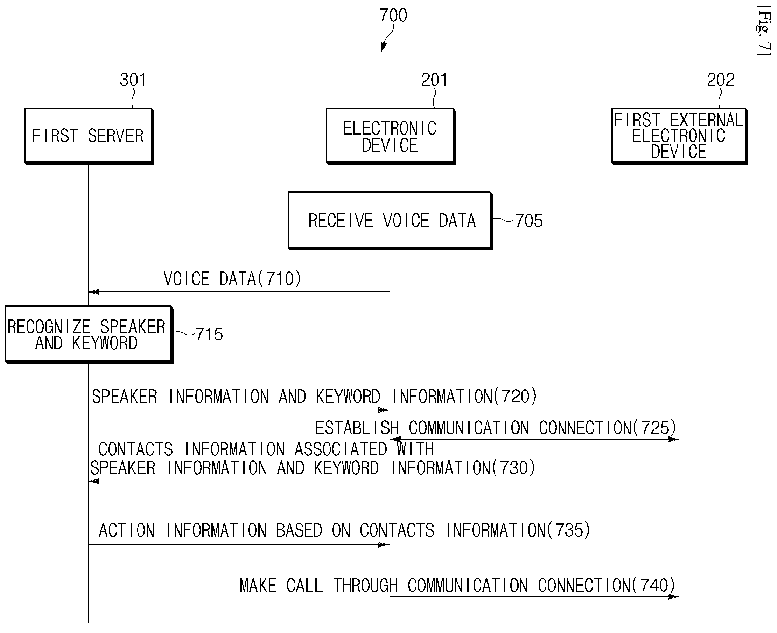

FIG. 7 is a signal flowchart illustrating a voice call executing method 700 based on parallel execution of speech recognition and communication connection, according to an embodiment.

According to an embodiment, the electronic device 201 may include a first server client controlling the communication with the first server 301, a contacts application managing contacts information, an account administrator managing account information associated with the second server 302 and account information of an external electronic device (e.g., the first external electronic device 202), a call application controlling the function to perform a voice call, and a communication framework (e.g., Bluetooth framework) controlling the communication with the external electronic device based on the specified protocol.

According to an embodiment, in operation 705, the electronic device 201 may receive voice data. The description of operation 705 may be the same or similar to the description associated with operation 605 of FIG. 6.

According to an embodiment, in operation 710, the electronic device 201 may transmit the voice data to the first server 301. The description of operation 710 may be the same or similar to the description associated with operation 610 of FIG. 6.

According to an embodiment, in operation 715, the first server 301 may recognize a speaker and a keyword. The description of operation 715 may be the same or similar to the description associated with operation 615 of FIG. 6.

According to an embodiment, in operation 720, the electronic device 201 may receive speaker information and keyword information. The first server 301 may transmit a parameter of a path rule (e.g., speaker information and keyword information) to the electronic device 201. For example, the speaker information may include account information, e-mail address, and/or a telephone number associated with the identified speaker. The keyword information may include the recognized keyword (e.g., "Teresa" and "Call"). According to an embodiment, in operation 720, the transmission of speaker information and keyword information by the first server 301 may be referred to as the transmission of the first path rule including first action information indicating searching for the speaker information and the keyword information (e.g., "Teresa") and an action (e.g., the establishment of communication connection) corresponding to the keyword (e.g., "Call"). For example, the speaker information and the keyword information may be received by the first server client of the electronic device 201.

The description of operation 720 may be the same or similar to the description associated with operation 620 of FIG. 6.

According to an embodiment, the electronic device 201 may search for mapping information between the user and an external electronic device and contacts information associated with the external electronic device, which are stored in the memory (e.g., the memory 290 of FIG. 2) of the electronic device 201, using the received speaker information and keyword information. According to an embodiment, the electronic device 201 may determine at least one external electronic device associated with the speaker, using the speaker information. According to an embodiment, the electronic device 201 may search for contact information corresponding to a keyword (e.g., Teresa) in the contacts of the determined at least one external electronic device. For example, the electronic device 201 may determine the external electronic device (e.g., the first external electronic device 202), which will perform communication connection, from among a plurality of external electronic devices based on the contact information. According to an embodiment, the electronic device 201 may search for contacts information, using a contacts application installed in the electronic device 201. According to an embodiment, the electronic device 201 may receive the speaker information and the keyword information, using the first server agent and may perform searching based on the received speaker and keyword information, using a contacts application.

According to an embodiment, in operation 725, the electronic device 201 may establish the communication connection to the first external electronic device 202. For example, the contacts application of the electronic device 201 may transmit a message for making a request for the connection, to the call application of the electronic device 201. According to an embodiment, the electronic device 201 may determine the connection to the first external electronic device 202, using the speaker and/or the keyword (e.g., "Teresa"). According to an embodiment, the electronic device 201 may establish the communication connection to the first external electronic device 202 determined based at least on speaker information and keyword information received from the first server 301. For example, the first server client of the electronic device 201 may establish the communication connection, using the keyword (e.g., "call") included in the first action information. The first server client of the electronic device 201 may transmit contacts information and account information to a call application. The call application may obtain address information corresponding to the account information, from the account administrator. The call application may request a Bluetooth framework to establish the communication connection to the first external electronic device 202 by using the obtained address information.

According to an embodiment, in operation 730, the electronic device 201 may transmit contacts information associated with speaker information and keyword information, to the first server 301. For example, the description of operation 730 may be the same or similar to the description associated with operation 625 of FIG. 6.

According to an embodiment, in operation 735, the electronic device 201 may receive action information based on contacts information, from the first server 301. For example, the description of operation 735 may be the same or similar to the description associated with operation 630 of FIG. 6.

According to an embodiment, in operation 740, the electronic device 201 may make a call through the communication connection. The description of operation 740 may be the same or similar to the description associated with operation 640 of FIG. 6.

In the embodiment of FIG. 7, the electronic device 201 may perform the establishment (e.g., operation 725) of the communication connection and the transmission (e.g., operation 730) of contacts information in parallel. For example, the establishment of the communication connection and the transmission of contacts information may be performed substantially at the same time. The electronic device 201 may perform the establishment of the communication connection and the transmission of contacts information in parallel, thereby reducing the time required to make the voice call.

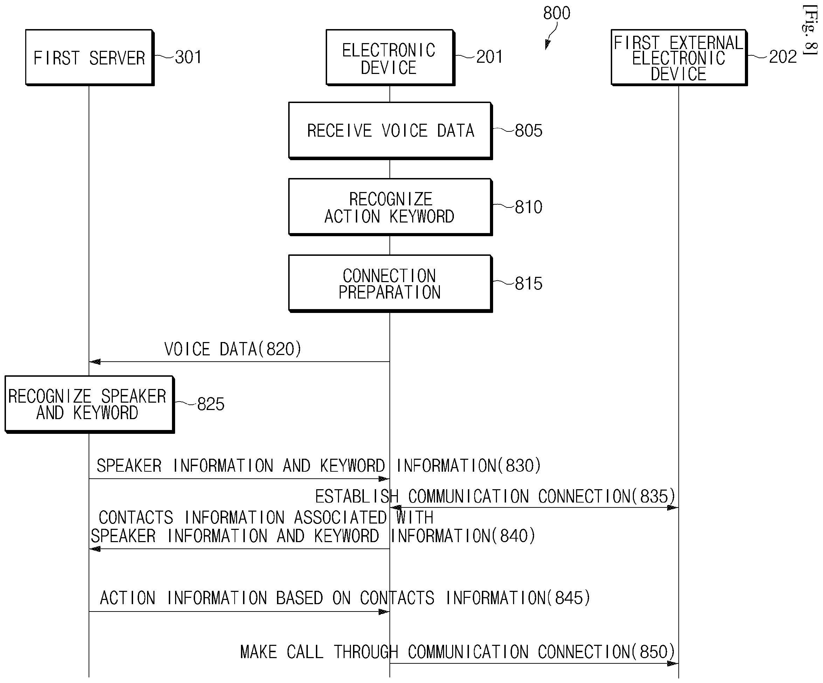

FIG. 8 is a signal flowchart illustrating a voice call executing method 800 based on local speech recognition, according to an embodiment.

According to an embodiment, the electronic device 201 may include a first server client controlling the communication with the first server 301, a contacts application managing contacts information, an account administrator managing account information associated with the second server 302 and account information of an external electronic device (e.g., the first external electronic device 202), a call application controlling the function to perform a voice call, and a communication framework (e.g., Bluetooth framework) controlling the communication with the external electronic device based on the specified protocol.

According to an embodiment, in operation 805, the electronic device 201 may receive voice data. The description of operation 805 may be the same or similar to the description associated with operation 605 of FIG. 6.

According to an embodiment, in operation 810, the electronic device 201 may recognize an action keyword (e.g., "call") from the voice data, using the speech recognition function of the electronic device 201. According to an embodiment, the electronic device 201 may recognize the action keyword from the voice data, using the first server client. For example, the electronic device 201 may recognize the action keyword corresponding to "call" from the voice data.

According to an embodiment, in operation 815, the electronic device 201 may perform connection preparation. For example, the first server client of the electronic device 201 may transmit a message for making a request for Bluetooth connection, to the call application. For example, when the Bluetooth connection requesting message is received, the call application may make a request for the Bluetooth connection to a Bluetooth framework.

According to an embodiment, in operation 820, the electronic device 201 may transmit the voice data to the first server 301. The description of operation 820 may be the same or similar to the description associated with operation 610 of FIG. 6.

For example, the electronic device 201 may perform operation 815 and operation 820 in parallel.

According to an embodiment, in operation 825, the first server 301 may recognize a speaker and a keyword. The description of operation 825 may be the same or similar to the description associated with operation 615 of FIG. 6.

According to an embodiment, in operation 830, the electronic device 201 may receive speaker information and keyword information. For example, the speaker information may include account information, e-mail address, and/or a telephone number associated with the identified speaker. For example, the keyword information may include the recognized keyword (e.g., "Teresa"). According to an embodiment, in operation 830, the transmission of speaker information and keyword information by the first server 301 may be referred to as the transmission of the first action information indicating searching for the speaker information and the keyword information. For example, the speaker information and the keyword information may be received by the first server client of the electronic device 201. According to an embodiment, the first server client may transmit the received speaker information and the received keyword information to the call application of the electronic device 201, through the contacts application of the electronic device 201 or directly.

According to an embodiment, in operation 835, the electronic device 201 may establish the communication connection to the first external electronic device 202. The description of operation 835 may be the same or similar to the description associated with operation 635 of FIG. 6.

According to an embodiment, in operation 840, the electronic device 201 may transmit contacts information associated with speaker information and keyword information, to the first server 301. For example, the description of operation 840 may be the same or similar to the description associated with operation 625 of FIG. 6.

According to an embodiment, in operation 845, the electronic device 201 may receive action information based on contacts information, from the first server 301. The description of operation 845 may be the same or similar to the description associated with operation 630 of FIG. 6.

According to an embodiment, in operation 850, the electronic device 201 may make a call through the communication connection. The description of operation 850 may be the same or similar to the description associated with operation 640 of FIG. 6.

In the embodiment of FIG. 8, the electronic device 201 performs the preparation action (e.g., operation 815) of the communication connection establishment based on the recognition (e.g., operation 810) of an action keyword within the voice data, thereby reducing the time required to make a voice call.

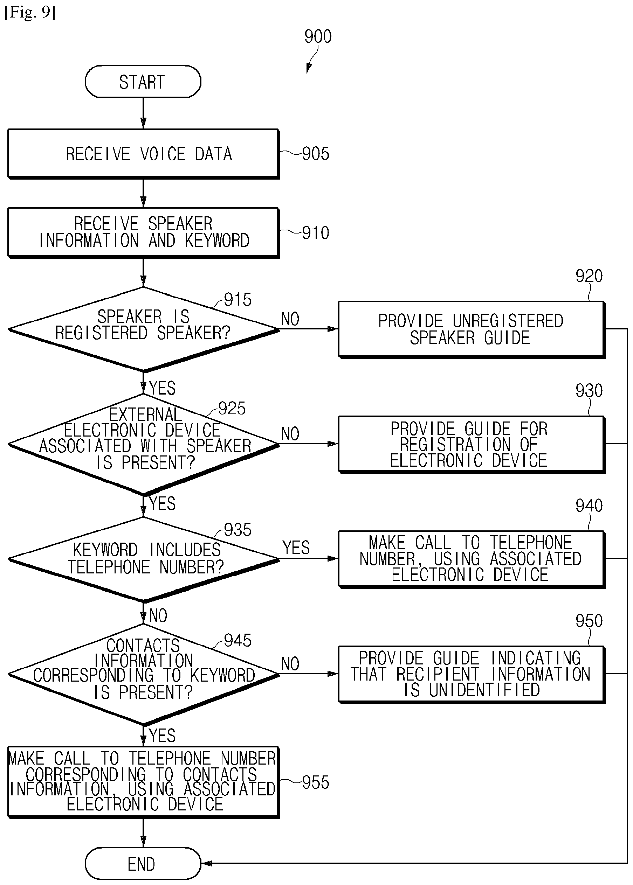

FIG. 9 is flowchart illustrating a call making method 900, according to an embodiment.

According to an embodiment, the electronic device 201 may include a first server client controlling the communication with the first server 301, a contacts application managing contacts information, an account administrator managing account information associated with the second server 302 and account information of an external electronic device (e.g., the first external electronic device 202), a call application controlling the function to perform a voice call, and a communication framework (e.g., Bluetooth framework) controlling the communication with the external electronic device based on the specified protocol.

According to an embodiment, in operation 905, the electronic device 201 may receive voice data. For example, the voice data may include the voice command corresponding to making a call. The description of operation 905 may be the same or similar to the description associated with operation 515 of FIG. 5 or operation 605 of FIG. 6.

According to an embodiment, in operation 910, the electronic device 201 may receive speaker information and a keyword. For example, the electronic device 201 may transmit the voice data to the first server 301 of FIG. 3 and may receive a path rule including action information and a parameter of path rule (e.g., speaker information and a keyword) from the first server 301. The description of operation 910 may be the same or similar to the description associated with operation 520 of FIG. 5. For example, the action information may be action information that allows the electronic device 201 to perform a specified action (e.g., the establishment of communication connection) using an external electronic device. The path rule may be information for instructing to perform an action by using the parameter.

According to an embodiment, in operation 915, the electronic device 201 may determine whether the speaker is a speaker registered with the electronic device 201. For example, prior to performing the specified action corresponding to the keyword, the electronic device 201 may determine whether the speaker is a speaker registered with the electronic device 201 by using the account administrator of the electronic device 201. When the speaker is not registered with the electronic device 201, the electronic device 201 may provide an unregistered speaker guide in operation 920. For example, the electronic device 201 may provide an auditory and/or visual guide indicating access denial for the unregistered speaker. For another example, the electronic device 201 may ignore the utterance of the unregistered speaker.

According to an embodiment, when the speaker is a registered speaker, in operation 925, the electronic device 201 may determine whether the external electronic device associated with the speaker is present. For example, the electronic device 201 may determine whether the external electronic device mapped to speaker or the external electronic device registered to the speaker is present. The electronic device 201 may determine whether the external electronic device associated with the speaker is present, using the account administrator.

According to an embodiment, when the external electronic device associated with the speaker is not present, the electronic device 201 may fail to perform the specified action corresponding to the path rule. According to an embodiment, in operation 930, the electronic device 201 may provide a guide for the registration of the external electronic device. For example, the electronic device 201 may provide an auditory and/ or visual guide that guides the procedure for registering the external electronic device. In another example, the electronic device 201 may ignore the utterance of the speaker whose device is not registered.

According to an embodiment, when the external electronic device associated with the speaker is present, in operation 935, the electronic device 201 may determine whether the keyword (e.g., the parameter of path rule) includes a telephone number. According to an embodiment, when the keyword includes a telephone number, the electronic device 201 may make a call to the telephone number using the external electronic device associated with the speaker. For example, the electronic device 201 may make the call after connecting to the associated external electronic device.

According to an embodiment, when the keyword does not include a telephone number, in operation 945, the electronic device 201 may determine whether contacts information corresponding to the keyword is present. According to an embodiment, when the contacts information corresponding to the keyword is not present, in operation 950, the electronic device 201 may provide a guide (e.g. user interface screen) indicating that recipient information is unidentified. For example, the electronic device 201 may provide a guide indicating that contacts information is not present, a guide to recommend Internet search, and/or a guide to repeat the voice command.

According to an embodiment, in operation 955, the electronic device 201 may make a call to the telephone number corresponding to the contact information, using the external electronic device associated with the speaker. The description of operation 955 may be the same or similar to the description associated with operation 535 of FIG. 5.

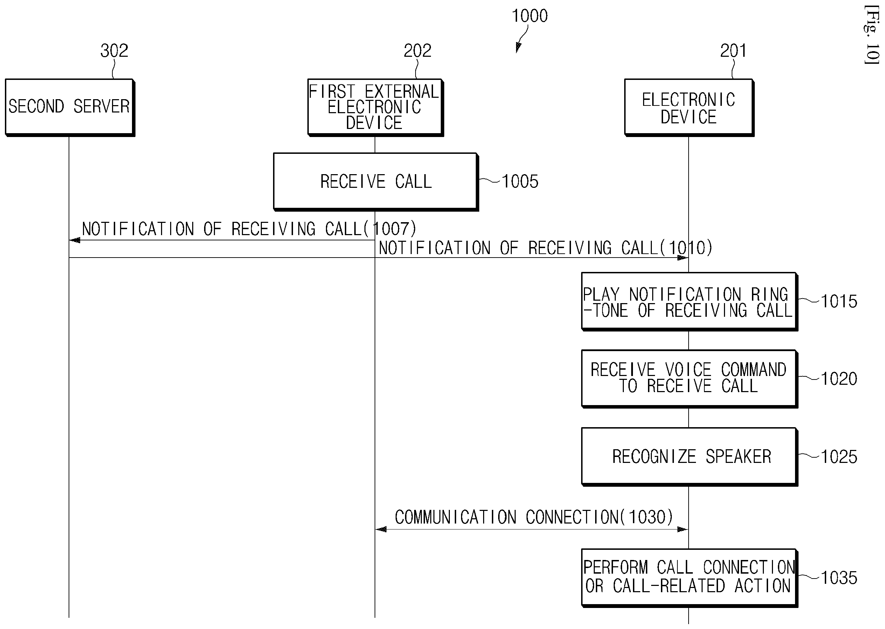

FIG. 10 is a flowchart illustrating a call receiving method 1000, according to an embodiment.

According to an embodiment, in operation 1005, a call may be received by the first external electronic device 202. For example, in operation 1005, the first external electronic device 202 may play a specified ring-tone in response to an incoming call.

According to an embodiment, in operation 1007, the first external electronic device 202 may transmit the notification of the receiving of the call to the second server 302. The first external electronic device 202 may transmit the notification in response to receiving the call. According to an embodiment, the first external electronic device 202 may transmit the notification to the second server 302 while discovering the electronic device 201. For example, the first external electronic device 202 may request the second server 302 to transmit the notification to the electronic device 201. According to an embodiment, the first external electronic device 202 may request other electronic devices associated with the account of the first external electronic device 202 (e.g., electronic devices having the functionality associated with receiving a call) to transmit the notification of receiving a call.

According to an embodiment, in operation 1010, the second server 302 may transmit the notification of the receiving of the call to the electronic device 201. For example, the notification may include identification information of the first external electronic device 202 (e.g., account information associated with the first external electronic device 202 (e.g., the account information about the second server 302 associated with the first user 212 of FIG. 2), e-mail address, and/or a telephone number) and address information of the first external electronic device 202 (e.g., the Bluetooth address of the first external electronic device 202). The second server 302 may transmit the notification to the electronic device 201 based on the reception of the notification from the first external electronic device 202.

According to an embodiment, in operation 1015, the electronic device 201 may play a notification ring-tone, in response to the notification of the receiving of the call. For example, when the identification information of the first external electronic device 202 included in the notification is identification information registered with the electronic device 201, the electronic device 201 may play the notification ring-tone. In another example, when the ring-tone of the first external electronic device 202 and the notification are received, the electronic device 201 may play the notification ring-tone.

According to an embodiment, in operation 1020, the electronic device 201 may receive a voice command to receive the call. For example, the voice command may be performed by the user (e.g., the first user 212 of FIG. 2) of the first external electronic device 202.

According to an embodiment, in operation 1025, the electronic device 201 may perform speaker recognition. For example, the electronic device 201 may perform speaker recognition on the voice command to receiving the call. For example, the electronic device 201 may transmit voice data corresponding to the voice command to the first server 301 of FIG. 3 and the first server 301 may perform speaker recognition. In another example, the electronic device 201 may perform speaker recognition using the voice data and the voice model stored in the electronic device 201.

According to an embodiment, the electronic device 201 may determine whether the recognized speaker is a user of the first external electronic device 202 associated with the notification of the receiving of the call. For example, the electronic device 201 may obtain the account information of the first external electronic device 202, which may be included in the notification from the second server 302. The electronic device 201 may determine whether the account associated with the recognized speaker is the same as the account of the first external electronic device 202. When it is determined that the recognized speaker is the user of the first external electronic device 202, the electronic device 201 may perform communication connection with the first external electronic device 202.

According to an embodiment, in operation 1030, the electronic device 201 may perform communication connection to the first external electronic device 202. For example, the electronic device 201 may perform communication connection to the first external electronic device 202, using the address information of the first external electronic device 202 received through the notification from the second server 302.

According to an embodiment, in operation 1035, the electronic device 201 may perform a call connection or a call-related action corresponding to an incoming call, using the first external electronic device 202.

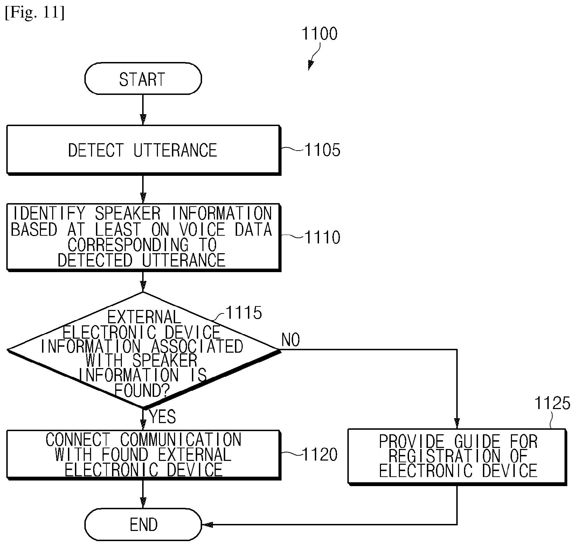

FIG. 11 is a flowchart illustrating an external electronic device connection method 1100, according to an embodiment.

According to an embodiment, in operation 1105, the electronic device 201 may detect an utterance of a user (e.g., the first user 212 of FIG. 2). For example, the electronic device 201 may detect an utterance, using the sound input device of the electronic device 201 or an external electronic device operatively connected to the electronic device 201. The state of the electronic device 201 may transition from a first state to a second state, in response to the detection of the utterance. For example, the state of the electronic device 201 may transition from the first state (e.g., an idle state or a standby state) to the second state (e.g., a wake-up state or an active state) in response to the detection of the utterance. In another example, the electronic device 201 may be in the second state before the detection of the utterance.

According to an embodiment, in operation 1110, the electronic device 201 may identify speaker information based at least partly on the voice data corresponding to the detected utterance. For example, the voice data corresponding to the utterance may include a specified voice command (e.g., a wake-up command) and a voice command. In another example, the voice data corresponding to the utterance may include the voice command received after the specified voice command. In yet another example, the voice data corresponding to the utterance may include the specified voice command (e.g., the wake-up command). According to an embodiment, the electronic device 201 may obtain speaker information based at least on speech recognition of the voice data. For example, the electronic device 201 may recognize the speaker (e.g., the first user 212) corresponding to the voice data, using the speech recognition function embedded in the electronic device 201. In another example, the electronic device 201 may transmit the voice data to an external electronic device (e.g., the first server 301 of FIG. 3), using a communication circuit (e.g., the communication circuit 290 of FIG. 2) and may obtain speaker information obtained based on speech recognition, from the external electronic device. According to an embodiment, the speaker information may include the identification information of the speaker or an electronic device (e.g., the first external electronic device 202 of FIG. 2) associated with the speaker. For example, the speaker information may include the account information (e.g., account information stored in the second server 302 of FIG. 3, telephone number, and/or e-mail address) of the speaker or the electronic device associated with the speaker.

According to an embodiment, the electronic device 201 may obtain action information based at least on speech recognition of the voice data. For example, the electronic device 201 may recognize the keyword(s) corresponding to the voice data, using the speech recognition function embedded in the electronic device 201 and may obtain the action information corresponding to the keyword(s). In another example, the electronic device 201 may transmit the voice data to an external electronic device (e.g., the first server 301 of FIG. 3) and may receive action information generated based on speech recognition, from the external electronic device.

According to an embodiment, in operation 1115, the electronic device 201 may determine whether the external electronic device information associated with the speaker information is found. For example, the electronic device 201 may search for external electronic device information associated with the speaker, based on the account stored in the memory (e.g., the memory 230 of FIG. 2) of the electronic device 201 and external electronic device list information associated with the account.

According to an embodiment, when the external electronic device information associated with the speaker is found, in operation 1120, the electronic device 201 may connect to the found external electronic device (e.g., the first external electronic device 202 of FIG. 2) via a communication circuit (e.g., the communication circuit 290 of FIG. 2). According to an embodiment, the electronic device 201 may obtain the address (e.g., Bluetooth address) of the external electronic device associated with the speaker and/or the identification information of the external electronic device. For example, the electronic device 201 may obtain the information of the first external electronic device 202 associated with the first user 212, from the memory 230 of the electronic device 201. According to an embodiment, the address of the external electronic device may be received from an account management server (e.g., the second server 302 of FIG. 3). According to an embodiment, the electronic device 201 may connect the communication with the external electronic device. For example, the electronic device 201 may connect the communication with the external electronic device, using the address of the external electronic device and/or the identification information of the external electronic device. For example, the electronic device 201 may connect the communication with the external electronic device, by making a request for the connection using the obtained address information of the external electronic device, to the Bluetooth framework of the electronic device 201.

According to an embodiment, the electronic device 201 may obtain action information based at least on speech recognition of the voice data. According to an embodiment, the electronic device 201 may determine one external electronic device of the plurality of external electronic devices associated with the identified speaker. For example, the electronic device 201 may determine one external electronic device of a plurality of external electronic devices associated with the action information recognized from voice data, the keyword included in the action information, and/or the speaker identified using the keyword. For example, the electronic device 201 may determine one external electronic device of the plurality of external electronic devices based on the degree of proximity and/or the connection frequency of each of the plurality of external electronic devices associated with the identified speaker. For example, the electronic device 201 may select an external electronic device, which has been most recently connected to the electronic device 201, from among the plurality of external electronic devices associated with the identified speaker.

According to an embodiment, after the communication connection to the external electronic device, the electronic device 201 may perform an action corresponding to action information and/or the keyword, using the external electronic device. For example, the electronic device 201 may perform an incoming call, an outgoing call, music playback, data reception, and/or data transmission, by using the connected external electronic device. According to an embodiment, the electronic device 201 may differently set up the profile of the communication connection to the external electronic device, based on the action information and/or the keyword.

According to an embodiment, when an external electronic device associated with speaker information is not found, in operation 1125, the electronic device 201 may provide a guide for the registration of an electronic device. For example, the electronic device 201 may provide a visual and/or auditory guide for the registration of an electronic device.

According to an embodiment, an electronic device (e.g., the electronic device 201 of FIG. 2) may include at least one communication circuit (e.g., the communication circuit 290 of FIG. 2), a sound input circuit (e.g., the sound input device 250 of FIG. 2), a processor (e.g., the processor 220 of FIG. 2) operatively connected to the at least one communication circuit and the sound input circuit, and a memory (e.g., the memory 230 of FIG. 2) operatively connected to the processor. According to an embodiment, the memory may store instructions that, when executed, cause the processor to perform the actions of the electronic device to be described.

According to an embodiment, the electronic device 201 may obtain voice data corresponding to the detected utterance, when an utterance is detected using the sound input circuit, may identify speaker information of the voice data based at least on speech recognition of the voice data, may communicatively connect the electronic device to a first external electronic device (e.g., the first external electronic device 202), using address information of the first external electronic device 202 associated with the speaker information, and may perform an action corresponding to the voice data together with the first external electronic device by using the at least one communication circuit.

According to embodiments, the electronic device 201 transmits the obtained voice data to a first server (e.g., the first server 301 of FIG. 3), using the at least one communication circuit and receives the speaker information from the first server 301.

According to an embodiment, the electronic device 201 may receive at least one keyword identified based on the speech recognition of the voice data, from the first server.

According to an embodiment, the electronic device 201 may search for contact information corresponding to the identified speaker information and the at least one keyword, using the identified speaker information and the at least one keyword and may transmit the contact information to the first server 301.

According to an embodiment, the electronic device 201 may select the first external electronic device from a plurality of external electronic devices associated with the identified speaker information, based at least on the at least one keyword. For example, the first electronic device 201 may be associated with the contact information.

According to an embodiment, the electronic device may receive action information based on the contact information, from the first server 301.

According to an embodiment, the action information may include an action associated with making a call. The electronic device may make the call using the first external electronic device 202.

According to an embodiment, the electronic device 201 may select the first external electronic device 202 from a plurality of external electronic devices associated with the identified speaker information, based on a degree of proximity and/or a connection frequency of each of the plurality of external electronic devices,

According to an embodiment, the electronic device and the first external electronic device may be connected based on a Bluetooth communication standard.

According to an embodiment, the speaker information may include account information, an e-mail address, and/or a telephone number associated with the speaker information, and the account information, the e-mail address, and the telephone number associated with the speaker information and address information of the first external electronic device associated with the speaker information may be received from a second server (e.g., the second server 302 of FIG. 3).

According to an embodiment, a communication connection method of the electronic device 201 may include obtaining voice data corresponding to the detected utterance when an utterance is detected, identifying speaker information of the voice data based at least on speech recognition of the voice data, communicatively connecting the electronic device to a first external electronic device 202, using address information of the first external electronic device 202 associated with the speaker information, and performing an action corresponding to the voice data together with the first external electronic device.

According to an embodiment, the identifying of the speaker information when include transmitting the obtained voice data to a first server 301 and receiving the speaker information from the first server 301.

According to an embodiment, the communication connection method may further include receiving at least one keyword identified based on the speech recognition of the voice data, from the first server 301.

According to an embodiment, the communication connection method may further include searching for contact information corresponding to the identified speaker information and the at least one keyword, using the identified speaker information and the at least one keyword and transmitting the contact information to the first server 301.

According to an embodiment, the communication connection method may further include selecting the first external electronic device from a plurality of external electronic devices associated with the identified speaker information, based at least on the at least one keyword. The first external electronic device 202 may be associated with the contact information.

According to an embodiment, an electronic device (e.g., the electronic device 201 of FIG. 2) may include at least one communication circuit (e.g., the communication circuit 290 of FIG. 2), a sound input circuit (e.g., the sound input device 250 of FIG. 2), a processor (e.g., the processor 220 of FIG. 2) operatively connected to the at least one communication circuit and the sound input circuit, and a memory (e.g., the memory 230 of FIG. 2) operatively connected to the processor. According to an embodiment, the memory may store account information and address information associated with at least one external electronic device (e.g., the first external electronic device 202 of FIG. 2). The memory may store instructions that, when executed, cause the processor to perform the actions of the electronic device to be described.

According to an embodiment, the electronic device 201 may receive voice data, using the sound input circuit, may identify account information of a speaker associated with the voice data, based at least on speech recognition of the voice data, may obtain address information of a first external electronic device 202 associated with the account information, from the memory, and may communicatively connect the electronic device to the first external electronic device, using the at least one communication circuit.

According to an embodiment, the electronic device 201 may transmit the received voice data to a first server 301, using the at least one communication circuit and may receive the account information of the speaker information from the first server.

According to an embodiment, the electronic device 201 may identify at least one keyword associated with the voice data based at least on the speech recognition of the voice data. For example, the at least one keyword may correspond to an action using the first external electronic device.

According to an embodiment, the electronic device 201 may transmit the received voice data to a first server, using the at least one communication circuit and may receive the at least one keyword from the first server.

According to an embodiment, the first external electronic device 202 may be a device that is most recently connected to the electronic device 201.

The electronic device according to certain embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that certain embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Certain embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to certain embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to certain embodiments, each component (e.g., a module or a program) of the above-described components may include a single entity or multiple entities. According to certain embodiments, one or more of the above-described components may be omitted, or one or more other components may be added. Alternatively or additionally, a plurality of components (e.g., modules or programs) may be integrated into a single component. In such a case, according to certain embodiments, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

Certain of the above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein.

While the disclosure has been shown and described with reference to various embodiments thereof, it will be understood by those skilled in the art that various changes in form and details may be made therein.

## Claims

1. An electronic device (201) comprising:
at least one communication circuit (290);
a sound input circuit (250);
a processor (220) operatively connected to the at least one communication circuit (290) and the sound input circuit (250); and
a memory (230) operatively connected to the processor (220), wherein the memory (230) stores instructions that, when executed, cause the processor (220) to:
when an utterance is detected using the sound input circuit (250), obtain voice data corresponding to the detected utterance of a speaker,
transmit the obtained voice data to a first server, using the at least one communication circuit, and, based on transmitting the obtained voice data, obtain:
(i) speaker information of the speaker from the first server, the speaker information including identification information of the speaker, and
(ii) a path rule and a parameter from the voice data at least partly based on speech recognition of the voice data from the first server, the path rule including action information to make a call, the parameter corresponding to contact information, and the contact information corresponding to a keyword recognized from the voice data,
determine a plurality of external electronic devices (202, 203, 204) associated with the speaker,
select a first external electronic device (202), among a plurality of external electronic devices (202-204) associated with the speaker identified from the voice data, by searching contacts associated with the plurality of external electronic devices for the contact information corresponding to the keyword, the first external electronic device (202) storing the contact information corresponding to the keyword,
communicatively connect the electronic device (201) to the first external electronic device (202), using address information of the first external electronic device (202), and
perform an action corresponding to the action information using the first external electronic device (202) by using the at least one communication circuit (290).

2. The electronic device of claim 1, wherein the electronic device and the first external electronic device are connected based on a Bluetooth communication standard.

3. The electronic device of claim 1, wherein the account information and address information of the first external electronic device are received from a second server.

4. A communication connection establishing method of an electronic device (201), the method comprising:
when an utterance is detected, obtaining voice data corresponding to the detected utterance of a speaker;
transmitting the obtained voice data to a first server, using a communication circuit, and, based on transmitting the obtained voice data, obtaining:
(i) speaker information of the speaker from the first server, the speaker information including identification information of the speaker, and
(ii) a path rule and a parameter from the voice data based at least on speech recognition of the voice data from the first server, the path rule including action information to make a call, the parameter corresponding to contact information, and the contact information corresponding to a keyword recognized from the voice data;
selecting a first external electronic device (202), among a plurality of external electronic devices (202-204) associated with the speaker identified from the voice data, by searching contacts associated with the plurality of external electronic devices for the contact information corresponding to the keyword, the first external electronic device (202) storing the contact information corresponding to the keyword;
communicatively connecting the electronic device (201) to the first external electronic device (202), using address information of the first external electronic device (202); and
performing an action corresponding to the action information using the first external electronic device (202).

## Patentansprüche

1. Elektronische Vorrichtung (201), umfassend:
mindestens eine Kommunikationsschaltung (290);
eine Toneingangsschaltung (250);
einen Prozessor (220), der mit der mindestens einen Kommunikationsschaltung (290) und der Toneingangsschaltung (250) wirkverbunden ist; und
einen Speicher (230), der mit dem Prozessor (220) wirkverbunden ist, wobei der Speicher (230) Anweisungen speichert, die bei Ausführung den Prozessor (220) zu Folgendem veranlassen:
wenn eine Äußerung unter Verwendung der Toneingangsschaltung (250) detektiert wird, Erlangen von Sprachdaten, die der detektierten Äußerung eines Sprechers entsprechen,
Übertragen der erlangten Sprachdaten an einen ersten Server unter Verwendung der mindestens einen Kommunikationsschaltung und, basierend auf dem Übertragen der erlangen Sprachdaten, Erlangen von Folgendem:
(i) Sprecherinformationen des Sprechers von dem ersten Server, wobei die Sprecherinformationen Identifikationsinformationen des Sprechers enthalten, und
(ii) einer Pfadregel und einem Parameter aus den Sprachdaten, die mindestens teilweise auf der Spracherkennung der Sprachdaten von dem ersten Server basieren, wobei die Pfadregel Aktionsinformationen zum Tätigen eines Anrufs enthält, der Parameter Kontaktinformationen entspricht und die Kontaktinformationen einem aus den Sprachdaten erkannten Schlüsselwort entsprechen,
Bestimmen einer Vielzahl von externen elektronischen Vorrichtungen (202, 203, 204), die dem Sprecher zugeordnet sind,
Auswählen einer ersten externen elektronischen Vorrichtung (202) aus einer Vielzahl von externen elektronischen Vorrichtungen (202-204), die dem aus den Sprachdaten identifizierten Sprecher zugeordnet sind, durch Durchsuchen von Kontakten, die der Vielzahl von externen elektronischen Vorrichtungen zugeordnet sind, nach den dem Schlüsselwort entsprechenden Kontaktinformationen, wobei die erste externe elektronische Vorrichtung (202) die dem Schlüsselwort entsprechenden Kontaktinformationen speichert,
kommunikatives Verbinden der elektronischen Vorrichtung (201) mit der ersten externen elektronischen Vorrichtung (202) unter Verwendung von Adressinformationen der ersten externen elektronischen Vorrichtung (202), und
Durchführen einer den Aktionsinformationen entsprechenden Aktion unter Verwendung der ersten externen elektronischen Vorrichtung (202) durch Verwenden der mindestens einen Kommunikationsschaltung (290).

2. Elektronische Vorrichtung nach Anspruch 1, wobei die elektronische Vorrichtung und die erste externe elektronische Vorrichtung basierend auf einem Bluetooth-Kommunikationsstandard verbunden sind.

3. Elektronische Vorrichtung nach Anspruch 1, wobei die Kontoinformationen und Adressinformationen der ersten externen elektronischen Vorrichtung von einem zweiten Server empfangen werden.

4. Verfahren zum Herstellen einer Kommunikationsverbindung einer elektronischen Vorrichtung (201), wobei das Verfahren Folgendes umfasst:
wenn eine Äußerung detektiert wird, Erlangen von Sprachdaten, die der detektierten Äußerung eines Sprechers entsprechen;
Übertragen der erlangten Sprachdaten an einen ersten Server unter Verwendung der Kommunikationsschaltung und, basierend auf dem Übertragen der erlangen Sprachdaten, Erlangen von Folgendem:
(i) Sprecherinformationen des Sprechers von dem ersten Server, wobei die Sprecherinformationen Identifikationsinformationen des Sprechers enthalten, und
(ii) einer Pfadregel und einem Parameter aus den Sprachdaten, die mindestens auf der Spracherkennung der Sprachdaten von dem ersten Server basieren, wobei die Pfadregel Aktionsinformationen zum Tätigen eines Anrufs enthält, der Parameter Kontaktinformationen entspricht und die Kontaktinformationen einem aus den Sprachdaten erkannten Schlüsselwort entsprechen;
Auswählen einer ersten externen elektronischen Vorrichtung (202) aus einer Vielzahl von externen elektronischen Vorrichtungen (202-204), die dem aus den Sprachdaten identifizierten Sprecher zugeordnet sind, durch Durchsuchen von Kontakten, die der Vielzahl von externen elektronischen Vorrichtungen zugeordnet sind, nach den dem Schlüsselwort entsprechenden Kontaktinformationen, wobei die erste externe elektronische Vorrichtung (202) die dem Schlüsselwort entsprechenden Kontaktinformationen speichert;
kommunikatives Verbinden der elektronischen Vorrichtung (201) mit der ersten externen elektronischen Vorrichtung (202) unter Verwendung von Adressinformationen der ersten externen elektronischen Vorrichtung (202); und
Durchführen einer den Aktionsinformationen entsprechenden Aktion unter Verwendung der ersten externen elektronischen Vorrichtung (202).

## Revendications

1. Dispositif électronique (201) comprenant :
au moins un circuit de communication (290) ;
un circuit d'entrée sonore (250) ;
un processeur (220) connecté fonctionnellement à l'au moins un circuit de communication (290) et au circuit d'entrée sonore (250) ; et
une mémoire (230) connectée fonctionnellement au processeur (220), dans lequel la mémoire (230) stocke des instructions qui, lorsqu'elles sont exécutées, amènent le processeur (220) à :
lorsqu'un énoncé est détecté à l'aide du circuit d'entrée sonore (250), obtenir des données vocales correspondant à l'énoncé détecté d'un locuteur,
transmettre les données vocales obtenues à un premier serveur, à l'aide de l'au moins un circuit de communication, et, sur la base de la transmission des données vocales obtenues, obtenir :
(i) des informations de locuteur du locuteur à partir du premier serveur, les informations de locuteur comprenant des informations d'identification du locuteur, et
(ii) une règle de chemin et un paramètre à partir des données vocales au moins partiellement sur la base d'une reconnaissance de la parole des données vocales à partir du premier serveur, la règle de chemin comprenant des informations d'action pour passer un appel, le paramètre correspondant aux informations de contact, et les informations de contact correspondant à un mot-clé reconnu à partir des données vocales,
déterminer une pluralité de dispositifs électroniques externes (202, 203, 204) associés au locuteur, sélectionner un premier dispositif électronique externe (202), parmi une pluralité de dispositifs électroniques externes (202 à 204) associés au locuteur identifié à partir des données vocales, en recherchant des contacts associés à la pluralité de dispositifs électroniques externes pour les informations de contact correspondant au mot-clé, le premier dispositif électronique externe (202) stockant les informations de contact correspondant au mot-clé,
connecter de manière communicante le dispositif électronique (201) au premier dispositif électronique externe (202), en utilisant les informations d'adresse du premier dispositif électronique externe (202), et
effectuer une action correspondant aux informations d'action à l'aide du premier dispositif électronique externe (202) en utilisant l'au moins un circuit de communication (290).

2. Dispositif électronique selon la revendication 1, dans lequel le dispositif électronique et le premier dispositif électronique externe sont connectés sur la base d'une norme de communication Bluetooth.

3. Dispositif électronique selon la revendication 1, dans lequel les informations de compte et les informations d'adresse du premier dispositif électronique externe sont reçues d'un deuxième serveur.

4. Procédé d'établissement de connexion de communication d'un dispositif électronique (201), le procédé comprenant :
lorsqu'un énoncé est détecté, l'obtention de données vocales correspondant à l'énoncé détecté d'un locuteur ;
la transmission des données vocales obtenues à un premier serveur, à l'aide d'un circuit de communication, et, sur la base de la transmission des données vocales obtenues, l'obtention :
(i) d'informations de locuteur du locuteur à partir du premier serveur, les informations de locuteur comprenant des informations d'identification du locuteur, et
(ii) une règle de chemin et un paramètre à partir des données vocales sur la base au moins d'une reconnaissance de la parole des données vocales à partir du premier serveur, la règle de chemin comprenant des informations d'action pour passer un appel, le paramètre correspondant à des informations de contact, et les informations de contact correspondant à un mot-clé reconnu à partir des données vocales ;
la sélection d'un premier dispositif électronique externe (202), parmi une pluralité de dispositifs électroniques externes (202 à 204) associés au locuteur identifié à partir des données vocales, en recherchant des contacts associés à la pluralité de dispositifs électroniques externes pour les informations de contact correspondant au mot-clé, le premier dispositif électronique externe (202) stockant les informations de contact correspondant au mot-clé ;
la connexion de manière communicante du dispositif électronique (201) au premier dispositif électronique externe (202), à l'aide d'informations d'adresse du premier dispositif électronique externe (202) ; et
l'exécution d'une action correspondant aux informations d'action à l'aide du premier dispositif électronique externe (202).
